# EUROPÄISCHE PATENTANMELDUNG

(11) **EP 3 211 830 A1**
(43) Veröffentlichungstag der Anmeldung: **30.08.2017**
(21) Anmeldenummer: 17157420.5
(22) Anmeldetag: 22.02.2017
(51) Int. Cl.: H04L 12/24, H04L 12/26

(54) **VERFAHREN ZUM ÜBERWACHEN UND PLANEN EINER PRODUKTIONSZELLE UND NETZWERKMANAGEMENTSYSTEM FÜR EINE PRODUKTIONSZELLE**

(30) Priorität: 23.02.2016 DE 102016202772
(71) Anmelder: Siemens Aktiengesellschaft, 80333 München (DE)
(72) Erfinder: Frank, Reinhard, 81369 München (DE); Zeiger, Florian, 85635 Höhenkirchen-Siegertsbrunn (DE)

(57) **Zusammenfassung**

Die Erfindung betrifft ein Verfahren zum Überwachen und Planen einer Produktionszelle mit einer Mehrzahl von Geräten, zwischen denen Daten ausgetauscht werden, wobei eine erste Produktionszelle durch eine Hardware Konfiguration und eine Software Konfiguration sowie durch zwischen den Geräten ausgetauschte Daten charakterisierbar ist,
mit folgenden Schritten:
a) Erfassen von Information bezüglich der Hard- und Software Konfiguration zu einem bestimmten Zeitpunkt und bezüglich der ausgetauschten Daten zu dem gleichen bestimmten Zeitpunkt als Eigenschaften der ersten Produktionszelle;
b) Erstellen zumindest eines virtuellen, identischen Abbildes (zumindest eines Teils der ersten Produktionszelle unter Verwendung der erfassten Information;
c) Zuführen von zu verarbeitenden Daten an das virtuelle Abbild der Produktionszelle zu einem Zeitpunkt nach dem bestimmten Zeitpunkt;
d) Verarbeiten der zu verarbeitenden Daten durch das virtuelle Abbild der ersten Produktionszelle ;
e) Analyse der Funktionsweise des virtuellen Abbilds der Produktionszelle und Verwenden der Ergebnisse für die erste oder eine weitere Produktionszelle zur Überwachung oder/und Planung. Die Erfindung betrifft ferner ein entsprechendes Netzwerkmanagementsystem.

## Beschreibung

Die Erfindung betrifft ein Verfahren zum Überwachen und Planen einer Produktionszelle und ein Netzwerkmanagementsystem für eine Produktionszelle.

In der Automatisierungstechnik werden zum Monitoring und Management Industrieller Kommunikationsnetze in Produktionszellen spezielle Netzwerkmanagementsysteme (NMS) eingesetzt, beispielsweise SINEMA von Siemens. Eine Produktionszelle ist ein industrielles Netz oder Subnetz, innerhalb dessen zumindest eine Produktionshandlung vorgenommen wird.

Aufgaben eines NMS sind beispielsweise die sogenannte "device discovery", also das Feststellen, welche Geräte im Netzwerk vorhanden sind, ein "device monitoring" um eine korrekte, d.h. beispielsweise in Übereinstimmung mit service level agreements, Funktionsweise der vorhandenen Geräte zu überwachen, eine Überwachung der Performanz etc.

Ein NMS kann also als eine Kollektion oder Set von Hardware oder Software Tools beschreiben werden, welchen diese Funktionen ermöglicht. Diese speziellen, für die industrielle Kommunikation ausgelegten NMS sind notwendig, da andere Hersteller aus dem IT Umfeld mit den typischen IT-NMS die notwendigen Automatisierungsprotokolle, wie beispielsweise PROFINET, und Geräte nicht unterstützen.

Die Überwachung und Planung industrieller Netze ist eine kostenintensive und auch zeitaufwändige Prozedur und gerade bei Änderungen in bestehenden Netzen und dem Einführen neuer Geräte und Dienste durch die enge Verzahnung von Produktionsprozess und Kommunikation auch sehr komplex.

Es ist Aufgabe der Erfindung eine Möglichkeit zu schaffen, eine Produktionszelle effektiv zu planen und zu überwachen.

Diese Aufgabe wird durch die unabhängigen Ansprüche gelöst. Vorteilhafte Weiterbildungen sind Gegenstand der abhängigen Ansprüche.

Die Erfindung betrifft ein Verfahren zum Überwachen und Planen einer Produktionszelle mit einer Mehrzahl von Geräten, zwischen denen Daten ausgetauscht werden.
Eine erste Produktionszelle lässt sich durch eine Hardware Konfiguration, eine Software Konfiguration und zwischen den Geräten ausgetauschten Daten beschreiben.

Beispielsweise wird durch die Hardwarekonfiguration zumindest eine der folgenden Eigenschaften festgelegt:
- die Art des Geräts, beispielsweise festgelegt durch Gerätetyp,
- Position des Geräts,
- Firmware-Version,
- Seriennummer des Geräts
- durch das Gerät unterstützte Schnittstellen
- ein physikalischer Bezug der Geräte zueinander
- eine physikalische Topologie
- eine Art der Kommunikationsverbindung der Geräte zueinander, beispielsweise drahtlos oder drahtgebunden, verfügbare Bandbreite etc.

Beispielweise legt eine Software Konfiguration zumindest einen der folgenden Eigenschaften oder Parameter fest:
- verwendete Software,
- jeweilige Versionsnummer einer verwendeten Software,
- auf welchen Geräten läuft welche Software,
- benötigter Speicherplatz auf einem Speichermedium,
- benutzte Kommunikationsschnittstellen,
- benötigter Speicherbedarf im Arbeitsspeicher,
- zugeteilte Rechenzeit,
- Betriebssystem-spezifische Anforderungen, beispielsweise benötigte Bibliotheken, insbesondere Programmbibliotheken,
- logische Topologie,
- allgemeine und spezifische Konfigurationsdateien.

Es erfolgt ein Erfassen von Information bezüglich der Hard- und Software Konfiguration zu einem bestimmten Zeitpunkt und bezüglich der ausgetauschten Daten zu dem gleichen bestimmten Zeitpunkt als Eigenschaften der Produktionszelle.

Damit kann die Produktionszelle oder ausgewählte Teilaspekte hiervon zu einem bestimmten Zeitpunkt beschrieben werden, so dass ein Erstellen zumindest eines virtuellen, identischen Abbildes zumindest eines Teils der Produktionszelle unter Verwendung dieser erfassten Information erfolgen kann.

Nun werden zu verarbeitenden Daten an das virtuelle Abbild der Produktionszelle zugeführt und die zu verarbeitenden Daten durch das virtuelle Abbild der Produktionszelle verarbeitet. Es wird die Funktionsweise des virtuellen Abbilds der Produktionszelle analysiert, beispielsweise ob die zugeführten Daten zufriedenstellend, etwa innerhalb eines bestimmten Zeitfensters oder einer bestimmten Zuverlässigkeit, verarbeitet werden.

Ergebnisse dieser Analyse können auf die Produktionszelle, deren virtuelles Abbild erstellt wurde, übertragen werden. Damit kann eine Überwachung erfolgen, ohne in den Betrieb der Produktionszelle selbst einzugreifen. Weiterhin können diese Ergebnisse auch auf eine andere Produktionszelle übertragen werden, beispielsweise um die Produktionszelle deren virtuelles Abbild erstellt wurde, zu replizieren. Dies vereinfacht auch die Planung.

Vorzugsweise können auch eine oder mehrere Eigenschaften der Produktionszelle in der virtuellen Umgebung, also am virtuellen Abbild der Produktionszelle, verändert werden und dann zu verarbeitende Daten zugeführt werden. Dies erlaubt ein Testen von Veränderungen, beispielsweise ein Hinzufügen von neuen Geräten oder Applikationen oder ein Verändern der Kommunikationsbeziehungen, ohne Eingriff in die reale Produktionszelle, so dass ein effektives Planen und Testen an Realbedingungen möglich ist.

Insbesondere können als zu verarbeitenden Daten reale Datenströme verwendet werden, welche von der Produktionszelle selbst bezogen werden. Somit sind Messungen möglich, ohne die Datenströme in der Produktionszelle selbst durch Messungen zu beeinflussen, beispielsweise wenn für eine aktive Messung das Senden eines Testpaketes erforderlich ist.

Insbesondere werden in dem virtuellen Abbild mit Hard-/und Softwarekonfiguration physikalische, beispielsweise reale physikalische Messgrößen wie Übertragungsverzögerung, Reaktionszeit eines Aktuators, Bandbreite und nicht physikalische Parameter bestimmt, die dann automatisiert in der realen Produktionszelle eingestellt werden können, um dann eine verbesserte Produktion zu ermöglichen, beispielsweise indem diese physikalischen Größen entsprechend den Anforderungen des Produktionsprozesses optimiert werden.

Die Erfindung betrifft ferner ein entsprechendes Network Management System für eine Produktionszelle, ein Computerprogrammprodukt und Speichermedium.

Die Erfindung wird weiterhin anhand von Ausführungsbeispielen erläutert, die teilweise in den Figuren dargestellt sind. Es zeigen:
- Fig. 1:: Eine schematische Übersicht über Beziehungen zwischen Produktionszelle, Networkmanagementsystem und einer Umgebung, in der das virtuelle Abbild der Produktionszelle erstellt wird;
- Fig. 2:: ein schematisches Ablaufdiagramm und
- Fig. 3:: eine schematische Übersicht der Komponenten.

Die folgenden Ausführungsbeispiele zeigen Möglichkeiten, automatisiert neue Konfigurationen einer Produktionszelle zu erstellen, beispielsweise eine automatisierte Topologiekonfiguration.

Hierbei werden Emulation, d.h. das Versorgen eines virtuellen Abbilds der Produktionszelle mit echten Datenströmen aus der Produktionszelle, Simulation, d.h. das Versorgen eines virtuellen Abbilds der Produktionszelle mit nicht in der Produktionszelle erzeugten Datenströmen aus der Produktionszelle und What-If Analysen benutzt. Bei letzteren wird ein virtuelles Abbild verändert, etwa hinsichtlich Hardware, beispielsweise ein neues Gerät, hinsichtlich Software, wodurch beispielsweise neue logische Verbindungen zwischen der Geräten erstellt werden oder durch Verwenden anderer oder veränderter Datenströme und das Verhalten des so veränderten virtuellen Abbilds überprüft.

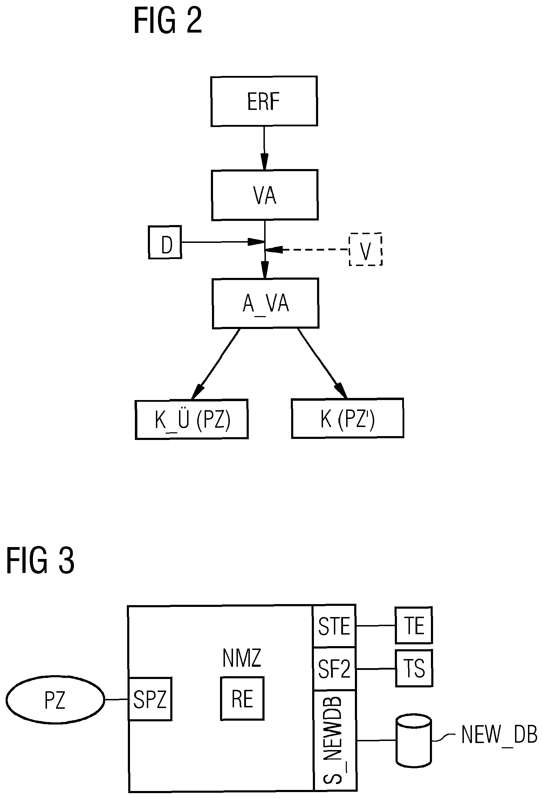

Ein schematischer Überblick über den Ablauf ist in Fig. 2 gezeigt. In einem Schritt ERF erfolgt ein Erfassen der Eigenschaften der Produktionszelle PZ. Daraus wird in einem Schritt VA ein virtuelles Abbild der Produktionszelle PZ erstellt. In einem Schritt A_VA wird eine Analyse der Funktionsweise des virtuellen Abbilds vorgenommen, wenn in einem Schritt D zu verarbeitende Daten zugeführt werden. Die Ergebnisse dieser Analyse dienen in einem Schritt K_Ü(PZ) der Überwachung oder/und Planung der Produktionszelle PZ oder in einem Schritt K(PZ') der Planung oder Replikation der Eigenschaften für eine weitere Produktionszelle.

In einem gestrichelt gezeichneten optionalen Schritt V kann ein Verändern der Eigenschaften der Produktionszelle PZ erfolgen, um diese Veränderungen testen zu können.

Gemäß den Ausführungsbeispielen wird automatisiert eine oder mehrere virtuelle Abbildung(en) einer Produktionszelle PZ, also eines industriellen Netzwerks oder Subnetzes, in dem eine Produktionsaktion erfolgt, erstellt. Diese virtuellen Instanzen der Produktionszelle PZ können dann optional mit realen, also insbesondere in Echtzeitauftretenden Daten, oder simulierten oder/und emulierten Datenströmen versorgt werden. Dadurch kann man während des laufenden Betriebs der Produktionszelle modifizierte Konfigurationen mit neuen Geräten oder geänderten Datenströmen erstellen und sogleich verifizieren.

Anschließend wird dann die erfolgreich validierte neue Konfiguration dem NMS der Produktionszelle zur Verfügung gestellt. Somit wird ein integriertes Planen und Überwachen der industriellen Kommunikation in Produktionszellen ermöglicht.

Alternativ oder zusätzlich kann so eine bestehende, den Anforderungen genügende, Produktionszelle PZ automatisiert repliziert werden, indem die neue Konfiguration einer neuen, noch nicht initialisierten Produktionszelle zur Verfügung gestellt wird.

Insbesondere folgende Aspekte werden im Rahmen der Ausführungsbeispiele adressiert:
- Zeitlich synchrones Erfassen und Darstellen von Topologie, Konfiguration und Zustand eines Netzes:
   Der Zustand eines Netzes definiert sich nicht nur z.B. über die vorliegende Topologie, also eine Kommunikationsbeziehung zwischen Geräten, sondern auch durch die im Netz laufenden oder/und verfügbaren Anwendungen und die durch die Anwendungen generierte Anzahl und das Volumen der Datenströme, die im Netz transportiert werden. Um ein virtuelles Abbild der Produktionszelle erstellen zu können, ist daher eine Erfassung dieser Größen zum gleichen Zeitpunkt nötig.
- Darstellen und Analysieren des realen Systemverhaltens, also des realen Datenverkehrs:
   Gerade für komplexe Szenarien ist es heutzutage nicht möglich das genaue, der Realität entsprechende Aufkommen des Datenverkehrs zu bestimmen und gerade bei Änderungen und Erweiterungen bestehender Systeme ist es nicht möglich das genaue zukünftige Systemverhalten vorherzusagen. Das Abschätzen vom zukünftigen Verkehrsaufkommen kann nur dann in ausreichender Genauigkeit gemacht werden wenn ein genaues, theoretisches Verkehrsmodell der jeweiligen Datenquelle, z.B. eines Sensors, einer Steuerung oder eines Aktuators vorliegt. Dies ist derzeit entweder extrem komplex und/oder kostspielig oder sogar technisch nicht machbar.
- Ermitteln und Nachbilden des Netzwerk-Zustandes und passives Messen:
   Um in Analysen aussagekräftige Ergebnisse zu erzielen ist es notwendig den Zustand eines Netzes zu definierten Zeitpunkten und/oder Ereignissen präzise zu erfassen. Dies ist durch Messungen in Real-Systemen nur schwer bzw. teilweise nicht zu erreichen, da passives Messen in vielen Fällen nicht möglich ist und aktives Messen, also beispielsweise das Senden von Testpaketen, das System beeinflussen würde.
- Analyse und Simulation bzw. Emulation neuer Konfigurationen oder/und neuer Geräte und automatisiertes Ausrollen neuer Konfigurationen:
   Das hier beschriebene System ermöglicht es auch neue Konfigurationen mit realen Datenströmen und Anwendungen zu Simulieren bzw. zu emulieren. Auch können neue Geräte zunächst virtuell konfiguriert und diese Konfiguration analysiert werden. Im Anschluss ist es dann möglich neue Konfigurationen automatisch in das reale Netz auszurollen.

Dies stellt einen Vorteil gegenüber den existierenden Lösungen dar: Derzeitige Netzwerkmanagementsysteme NMS haben den Schwerpunkt auf einer Fehlererkennung und Visualisieren der Netzwerk- oder Prozesszustände. Konfigurationen für Netzwerkgeräte können ausgerollt werden. Die Planung eines Produktionsnetzes und das Management des Produktionsnetzes während des Produktivbetriebs finden getrennt statt. Bezüglich Netzwerk Planung, Simulation, Emulation existieren derzeit Lösungen, die jeweils den Schwerpunkt auf einen der Aspekte, Planung, Simulation, oder Emulation von Netzen legen. Mit den existierenden Lösungen lassen sich derzeit aber keine "identischen" Abbilder real existierender Netze automatisiert erstellen, die nicht nur die entsprechende Hard- und Software Konfiguration, umfassend auch eine Topologie des Netzwerkes, und den Netzzustand repräsentieren können. Auch die bisher unbekannte Verwendung einer Kombination von Realdaten und simulierten oder/und emulierten Daten einer Produktionszelle während des laufenden Betriebs gemäß den Ausführungsbeispielen stellt einen Vorteil dar, um die Planung zu vereinfachen. Weiterhin existieren auch keine Mechanismen, z.B. zur Erfassung einer Konfiguration und deren Konvertierung und Instanziierung in der virtuellen Umgebung, die es erlauben würden, die beschriebenen existierenden Ansätze einfach zu kombinieren.

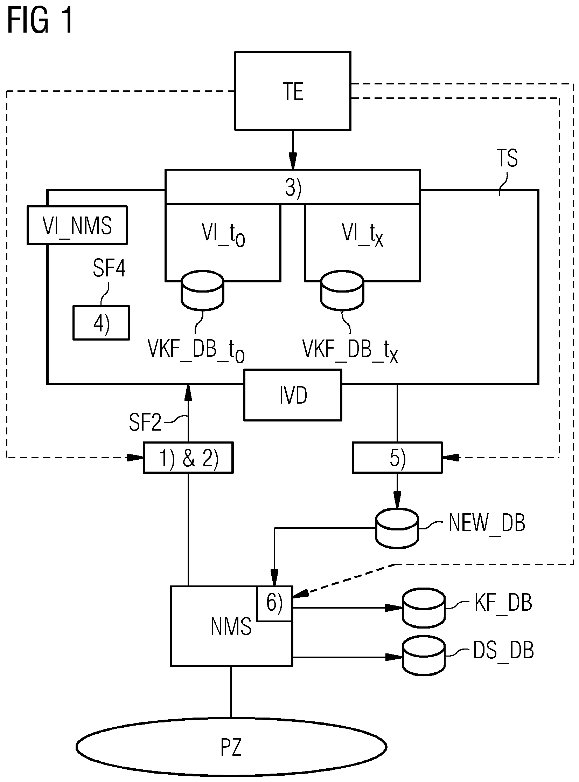

Die Ausführungsbeispiele überwinden diese Nachteile und umfassen im Wesentlichen 6 Arbeitsschritten bzw. Funktionalitäten, welche in der nachfolgenden Tabelle aufgelistet sind und in Zusammenhang mit Fig. 1 beschrieben werden.

| Merkmal | Umsetzung |
|---|---|
| Zeitlich synchrones Erfassen und Darstellen von Konfiguration, z.B. Topologie und Zu- | Schritt 1 & Schritt 2 |
| Darstellen und Analysieren des realen Systemverhaltens (realer Datenverkehr) | Schritt 3 |
| Ermitteln und Nachbilden des Netzwerk-Zustandes und Messen von Verkehrsgüteparametern ohne das System zu beeinflussen | Schritt 4 |
| Analyse und Simulation/Emulation neuer Konfigurationen / neuer Geräte und automatisiertes Ausrollen neuer Konfigurationen | Schritt 5 & Schritt 6 |

In einem ersten Schritt 1) werden reale Konfigurationsdaten, z.B. Topologiedaten, d.h. Daten welche die Kommunikationsbeziehungen der Geräte untereinander aufzeigen, und die Beschreibung der Datenströme der Produktionszelle in eine virtuelle Instanz gespiegelt, um ein Abbild der Realität in Datenstruktur zu einem Zeitpunkt t0 zu erhalten. Zusätzlich zu den Daten, welche im Netzwerkmanagementsystem NMS abgelegt sind, wird also ein Datenspiegel in einer virtuellen Umgebung angelegt. Dieser Datenspiegel beinhaltet neben der Beschreibung der einzelnen im realen Netzwerk aufgebauten Komponenten auch deren aktuelle Systemzustände. Dazu wird für jedes real im Netz existierende Gerät, also beispielsweise ein Netzwerkgerät, Controller, Aktuator, etc. eine Instanz in der virtuellen Umgebung erstellt. Zusätzlich wird auch die geladene Software inkl. Konfiguration in die virtuelle Umgebung übertragen, siehe Schnittstelle SF2. Dies kann z.B. mit Hilfe der Container-Technologie für Linux-Betriebssysteme umgesetzt werden. Ziel ist dabei jedes operierende oder "operational" System als virtuelle Instanz, d.h. als Abbild außerhalb der Produktionszelle, in dem Topologiespiegel zur Verfügung zu stellen.

Notwendige Information zum Instanziieren der Software (SW) Komponenten auf den virtuellen "devices" oder Geräten kann man entweder dem Konfigurationsdatensatz aus der Konfigurations-Datenbank KF_DB für die virtuelle Instanz, oder direkt aus dem Netzwerkmanagementsystem NMS übernehmen. Information bzgl. der Datenströme kann aus einer Datenstromdatenbank DS_DB bezogen werden.

Hierbei wird auch notwendige Information bzgl. der HW Plattform, z.B. dass es sich bei dem Prozessor um einen INTEL, ARM, etc. handelt, ausgewertet und die relevanten SW-Komponenten werden dementsprechend gewählt.

Das Erfassen der Gerätekonfiguration und Konfiguration, inklusive der Topologie, Eigenschaften und Zustand der Links, und gleichzeitig auch der im Netz laufenden Funktionen, Applikationen und Diensten, auch bzgl. der Kommunikation, ist dann die Grundlage für das Erfassen des aktuellen Netzzustandes und der folgenden, nahezu realen, Nachbildung der Funktionen, Applikationen und Dienste bzgl. der Kommunikation.

In über Software definierten Netzen oder "software defined networks" (SDN) basierten Netzen kann man zum Erfassen der Daten eine Schnittstelle zum SDN-Controller verwenden, der auf die benötigten Daten Zugriff hat.

Bei nicht SDN-basierten Netzen können Schnittstellen z.B. über SNMP (Simple Network Management Protocol, z.B. für Netzwerkparameter, WBEM (Web Based Enterprise Management), z.B. für Geräte-Info, Applikationen, Ressourcen, bzw. WMI (Windows Management Instrumentation) genutzt werden.

In einem zweiten Schritt 2) erfolgt das Erzeugen der Netzwerkinfrastruktur in einer virtuellen Umgebung:
Nachdem in Schritt 1) die notwendigen Konfigurationsdaten aus der Realumgebung in die virtuelle Umgebung übertragen worden sind können nun die Netzwerkkomponenten, sowie verfügbare Applikationssoftware mit der entsprechenden Konfiguration in der virtuellen Umgebung erzeugt und gestartet werden. Somit werden die im realen Netz vorhandenen Dienste in der virtuellen Umgebung installiert und instanziiert.

Dieser Schritt kann auf verschiedene Arten umgesetzt werden:
a) ein komplettes System kann als virtuelle Instanz laufen, also ein Klonen eines Systems vorgenommen werden;
b) es werden nur die Konfigurationsskripte transferiert. So können z.B. standardisierte Komponenten oder auf Templates basierte Systeme schnell instanziiert werden;
c) es werden einzelne Funktionen transferiert und gestartet, z.B. ein Linux Container beinhaltet eine Switching-Funktion oder Firewall-Funktion.

Bei einem dritten Schritt 3) erfolgt ein Initialisieren der Kommunikation zwischen den Geräten in der virtuellen Umgebung und Initialisieren der Datenströme entsprechend den Realdaten.

Die virtuelle Umgebung soll nun dazu dienen, dass Datenströme und Applikationsverhalten der realen Produktionszelle im Detail untersucht werden können. Dazu können einerseits Datenströme mit Hilfe von Lasterzeugungstools direkt in der virtuellen Umgebung erzeugt werden, z.B. ein Sensor in der virtuellen Umgebung wird so initialisiert, dass er einen Messdatenstrom nach vorgegebenem Muster erzeugt. So können entweder ein approximiertes Geräteverhalten, Störungen, die im Realsystem nicht vorkommen, oder auch geplante neue Dienste dargestellt werden.

Andererseits ist es vorzugsweise auch in Schritt IVD vorgesehen Realdatenströme aus der Produktionszelle in die virtuelle Umgebung einzuspeisen - z.B. ein Videostream aus der realen Produktionszelle wird auch über die entsprechende Schnittstelle, beispielsweise ein Interface bei Schritt 1 in Fig. 1 in die virtuelle Umgebung eingespeist. Somit werden die real existierenden Dienste auch in der virtuellen Umgebung realisiert und die virtuelle Umgebung repräsentiert den realen Netzzustand. Im dritten Schritt 3) wird somit sichergestellt, dass Dienste und Applikationen bzgl. der Kommunikation, entweder durch Einspeisen von Realdaten oder durch Emulation/Simulation, in der virtuellen Umgebung ein mit der Realität identisches Verhalten zeigen.

Es wird also eine virtuelle Instanz VI_t0 des (Teil-)Systems zu einem Zeitpunkt t0 durch das Spiegeln erzeugt mit einer entsprechenden virtuellen Instanz der Konfigurationsdatenbank VKF_DB_t0, die das (Teil-)System als Momentaufnahme oder "snapshot" zum Zeitpunkt t0 zeigen.

Nun kann die Funktion des (Teil-)Systems, z.B. beim Verarbeiten von Datenströmen beobachtet und analysiert werden, da eine virtuelle Instanz VI tx auch zu weiteren, späteren Zeitpunkten tx vorliegt, ebenso die entsprechende virtuelle Instanz der Konfigurationsdatenbank VKF_DB_tx.

Bei einem vierten Schritt 4) erfolgt eine Modifikation und Erweiterung des Topologiespiegels TS, der What-if Szenarien, Emulation von anderen Verkehrslasten, Ausfall-Szenarien. Schritte 1)-3) beschreiben, wie eine existierende Produktionszelle automatisiert in eine virtuelle Umgebung "gespiegelt" werden kann. Schritt 4) ermöglicht nun zusätzlich, dass neue, rein virtuelle Geräte bzw. Applikationen, in der virtuellen Umgebung hinzugefügt und instanziiert werden. Somit kann man die Szenarien in der virtuellen Umgebung erweitern und das Systemverhalten mit neuen, bisher nur geplanten Geräten untersuchen und bei diesen Untersuchungen reale Datenströme der existierenden Geräte zugrunde legen.

Es wird also einerseits auf Daten des realen Netzwerkmanagementsystem NMS zugegriffen, andererseits liegt eine virtuelle Instanz des Netzwerkmanagementsystem VI NMS vor, für das im Spiegel veränderte virtuelle (Teil-)system, zu dem eine Schnittstelle SF4 vorgesehen ist, über die dann auf das reale Netzwerkmanagementsystem NMS und das virtuelle Netzwerkmanagementsystem VI NMS zugegriffen werden kann und optional Skripte in die Simulationsumgebung oder Topologiespiegel TS eingespielt werden können.

Mit den vorherigen Schritten können nun eine oder mehrere virtuelle Instanzen einer Produktionszelle PZ erstellt werden. Innerhalb dieser virtuellen Instanzen können nun unterschiedliche Konfigurationen validiert werden oder auch Instanz übergreifend verschiedene Konfigurationen verglichen werden.

In einem fünften Schritt 5) erfolgt ein Erstellen von Konfigurationsprofilen unter Berücksichtigung der Modifikationen:

In jeder virtuellen Instanz können nun, insbesondere analog zu Schritt 1), die Konfigurationen der virtuellen Umgebung in Konfigurationen abgespeichert werden, die vom NMS der realen Produktionszelle ausgerollt werden können. Dazu wird eine weitere Datenbank New_DB, in der modifizierte Konfigurationen abgelegt werden, verwendet.

Für die im vierten Schritt 4) hinzugefügten rein virtuellen Instanzen werden ebenfalls entsprechende Konfigurationsprofile in der Datenbank abgespeichert und stehen zur Konfiguration in der realen Produktionszelle bereit.

In einem sechsten Schritt 6) erfolgt eine Konfiguration der realen, neuen Geräte oder "devices" in der Produktionszelle PZ. Um neue Konfigurationen in einer Produktionszelle PZ auszurollen kann das Netzwerkmanagementsystem NMS der Produktionszelle auf die Datenbank NEW DB mit den modifizierten Konfigurationen zugreifen und diese auf den Geräten in der Produktionszelle PZ speichern und aktivieren. Da die Datenbank NEW_DB mit den modifizierten Konfigurationen auch die neuen Profile für die rein virtuellen Geräte beinhaltet ist es nun auch möglich im letzten Schritt dafür reale Geräte in der Produktionszelle PZ zu installieren. In diesem Fall kann nun das Netzwerkmanagementsystem NMS der Produktionszelle PZ die entsprechende Konfiguration aus der Datenbank NEW_DB auf dem neuen Gerät speichern und aktivieren. Es können hier dem Netzwerkmanagementsystem NMS auch "Fahrpläne" hinterlegt werden, die die Reihenfolge von Updates oder/und Änderungen der realen Komponenten beschreibt. Prüfen von Berechtigungen und Rollen, sowie die zeitliche Koordination von den hier beschriebenen Schritten 1,2,3,5 und 6 findet durch eine vertrauenswürdigen Stelle oder Authorisierungseinheit TE oder "Trusted Entity" statt und stellt somit eine konsistente Aktualisierung der realen Infrastruktur sicher.

Die beschriebenen Ausführungsbeispiele ermöglichen so ein integriertes und automatisiertes bzw. IT gestütztes Planen, Rekonfigurieren, Konfigurieren oder/und Überwachen des industriellen Kommunikationsnetzes in einer Produktionszelle PZ. Virtuelle Instanzen werden automatisch generiert und erlauben eine Analyse und Prädiktion des Systemverhaltens zur Laufzeit, z.B. das Erstellen verschiedener virtueller Instanzen der gleichen realen Umgebung, um dann verschiedene Konfigurationen zu vergleichen. Es können ebenfalls realen Echtzeit-Daten aus dem System zusammen mit simulierten oder/und emulierten Komponenten bzw. Datenverkehr in den virtuellen Instanzen genutzt und untersucht werden. Somit kann zur Laufzeit eine neue Konfiguration einer bestehenden Topologie oder auch eine neue Topologie, z.B. das Hinzufügen eines neuen Gerätes, validiert werden.

Eine validierte neue Konfiguration wird dann dem Netzwerkmanagementsystem NMS der Produktionszelle PZ zur Verfügung gestellt und ermöglicht ein schnelles Ausrollen. Sowohl der Validierungsprozess, als auch das Ausrollen kann so weitestgehend automatisch erfolgen.

Ein Vorteil liegt also darin, dass real existierende Netzwerktopologien zusammen mit deren Konfiguration und Verhalten in eine virtuelle Umgebung "geklont" werden können, um im ersten Schritt ein mit der Realität "identisches" Abbild zu erstellen.

Optional oder alternativ kann auch Datenverkehr aus dem Realsystem in die virtuelle Instanz des Netzes eingespeist werden, um hier ein Systemverhalten realitätsnah zu analysieren. Nachdem man nun am virtuellen Abbild eine Optimierung oder Änderungen vorgenommen hat können die daraus resultierenden Änderungen oder Ergänzungen an der Konfiguration direkt in das reale Netz nahezu automatisiert übernommen werden. Dies minimiert auch die Zeit, die benötigt wird um neue Funktionen und Konfiguration im Netz zu parametrisieren - und somit senkt es auch die Kosten, sowohl bei Betrieb, als auch bei Nutzung.

Ermöglicht wird dies nun durch die Kombination von Elementen wie z.B. der Simulation von Netzen in virtuellen Umgebungen, dem Erfassen der Netzwerktopologie und dem Erstellen virtueller Abbilder von Applikationen, beispielsweise mit Hilfe von Containern, mit z.B. dem Erfassen der Netzwerkkonfiguration und dem Netzwerkzustand zum Zeitpunkt der Erstellung eines virtuellen Abbildes. Auch ist es in derzeitigen Netzwerksimulationsanwendungen nicht möglich direkt den Datenverkehr aus dem Realsystem oder das reale Verhalten einer Systemkomponente darzustellen.

Gerade die Möglichkeit Realdaten in eine virtuelle Umgebung einzuspeisen, die identisch, beispielsweise bzgl. der Topologie, ist mit dem realen Netzwerk bietet hier eine schnelle und einfache Möglichkeit auch den realen Netzwerkzustand zu replizieren.

Letztendlich kann man so auch eine komplette Produktionsanlage virtuell abbilden - inklusive aller Netzkomponenten, Steuerungen, und auch der darin enthaltenen Maschinenlogik.

Einen schematischen Überblick über Komponenten eines Netzwerkmanagementsystems NMS zeigt Fig. 3:
Das Netzwerkmanagementsystem NMS weist eine Recheneinheit RE und eine Mehrzahl von Schnittstellen auf, eine Schnittstelle SF2 zur Simulationsumgebung TS, eine Schnittstelle STE zur Authorisierungseinheit TE, eine Schnittstelle SNEW DBB zur Datenbank NEW DB für neue Konfigurationen und eine Schnittstelle SPZ zur Produktionszelle PZ. Die Schnittstelle SPZ kann optional Schnittstellen zur Konfigurationsdatenbank KF_DB oder/und zur Datenbank DS_DB, in welcher die Datenströme erfasst sind, umfassen. Damit können die für das virtuelle Abbild erforderlichen Daten aus der Produktionszelle PZ selbst oder/und den entsprechenden Datenbanken bezogen werden.

Die hier beschriebenen Ausführungsbeispiele lassen sich natürlich auch mit zukünftigen SDN basierten Netzen realisieren. In zukünftigen "web of systems" (WoS) Umgebungen werden dann einerseits virtuelle Instanzen der jeweiligen Geräte und Geräteklassen, andererseits auch die "Apps" in virtuellen Umgebungen instanziiert.

Insbesondere werden also folgende Möglichkeiten mit Hilfe der Ausführungsbeispiele ermöglicht:
1) Schnelle und sichere Installation eines neuen Gerätes durch Validieren einer neuen Konfiguration unter Realbedingungen, insbesondere einschließlich eines Validierens von Update-Plänen und evtl. benötigter Reihenfolgen oder/und Abhängigkeitsbeziehungen beim Ausrollen von Updates oder Konfigurationen.
2) Vergleich von Systemverhalten unter verschiedenen Lastszenarien, sogenannten What-if Szenarien.
3) Untersuchen von Ausfallszenarien.
4) Nutzung realer Daten in Echtzeit in virtuellen Instanzen.
5) Untersuchung des Systemverhaltens beim Einführen neuer Applikationen.
6) Analyse von Sicherheits- oder/und Angriffsszenarien auf Netzwerkebene bzw. Sicherheits- Audits, Konfiguration virtueller Firewalls.

Auch wenn die Erfindung in Zusammenhang mit spezifischen bevorzugten Ausführungsbeispielen, insbesondere in Bezug auf industrielle Netzwerke in denen das Protokoll Profinet angewendet wird, beschrieben wurde, ist es für den Fachmann entnehmbar, dass Kombinationen oder Modifikationen hiervon, sei es vollständig oder in einzelnen Aspekten für alle Ausführungsbeispiele möglich sind ebenso wie das Herausgreifen spezifischer Aspekte. Insbesondere ist eine Anwendung auch für andere Netzwerke möglich, insbesondere auch die erwähnten "Software Defined Networks".

## Patentansprüche

1. Verfahren zum Überwachen und Planen einer Produktionszelle mit einer Mehrzahl von Geräten, zwischen denen Daten ausgetauscht werden, wobei eine erste Produktionszelle (PZ) durch eine Hardware Konfiguration und eine Software Konfiguration sowie durch zwischen den Geräten ausgetauschte Daten charakterisierbar ist, mit folgenden Schritten:
a) Erfassen (ERF) von Information bezüglich der Hard- und Software Konfiguration zu einem bestimmten Zeitpunkt (t0) und bezüglich der ausgetauschten Daten zu dem gleichen bestimmten Zeitpunkt (t0) als Eigenschaften der ersten Produktionszelle (PZ) ;
b) Erstellen (VA) zumindest eines virtuellen, identischen Abbildes (VI_t0) zumindest eines Teils der ersten Produktionszelle (PZ) unter Verwendung der erfassten Information;
c) Zuführen (D) von zu verarbeitenden Daten an das virtuelle Abbild (VI_tx) der Produktionszelle (PZ) zu einem Zeitpunkt (tx) nach dem bestimmten Zeitpunkt (t0);
d) Verarbeiten der zu verarbeitenden Daten durch das virtuelle Abbild (VI_tx) der ersten Produktionszelle (PZ);
e) Analyse (A_VA) der Funktionsweise des virtuellen Abbilds (VI_tx) der Produktionszelle (PZ) und Verwenden der Ergebnisse für die erste Produktionszelle (PZ) oder eine weitere Produktionszelle zur Überwachung oder/und Planung.

2. Verfahren nach Anspruch 1, mit folgenden weiteren Schritten:
f) Verändern (V) von zumindest einer Eigenschaft des virtuellen Abbilds (VI tx) der ersten Produktionszelle (PZ) und Zuführen von zu verarbeitenden Daten an das veränderte, virtuelle Abbild (VI_tx);
g) Analyse der Funktionsweise des veränderten virtuellen Abbilds (VI_tx) der Produktionszelle (PZ).

3. Verfahren nach Anspruch 2, mit folgendem weiteren Schritt:
h) Übernehmen der Veränderung in die erste Produktionszelle (PZ) oder eine weitere Produktionszelle in Abhängigkeit vom Ergebnis der Analyse.

4. Verfahren nach einem der vorhergehenden Ansprüche, bei der die zu verarbeitenden Daten in Schritt c) reale Daten sind, die aus der ersten Produktionszelle (PZ) heraus geleitet werden oder künstliche Daten, die mittels eines Simulationswerkzeugs erzeugt werden.

5. Verfahren nach einem der vorhergehenden Ansprüche, bei dem das Gerät ein Netzwerkgerät, einen Controller, Sensor oder/und Aktuator umfasst.

6. Netzwerkmanagement System (NMS) für eine Produktionszelle (PZ) mit einer Mehrzahl von Geräten, zwischen denen Daten ausgetauscht werden mit
- einer Schnittstelle (SPZ) zur Produktionszelle (PZ), über die Information bezüglich einer Hard- und Softwarekonfiguration der Geräte in der Produktionszelle sowie innerhalb der Produktionszelle ausgetauschten Daten beziehbar sind;
- einer Schnittstelle (SF2) zu einer Simulationsumgebung (TS) in der virtuelle Abbilder einer Produktionszelle (PZ) erstellbar sind;
- einer Schnittstelle (STE) zu einer Authorisierungseinheit (TE), welche eine zeitliche Koordination sowie ein Überprüfen von Berechtigungen übernimmt;
- einer Schnittstelle (S NEWDB) zu einer Datenbank (NEW_DB), in der Konfigurationsdaten abgelegt sind, welche aus einer Analyse der Datenverarbeitung eines virtuellen Abbilds (VI_tx) der Produktionszelle (PZ) erstellt wurden und
- einer Recheneinheit (RE), die ausgestaltet ist zum
a)Erfassen (ERF), über die Schnittstelle (SPZ) zur Produktionszelle (PZ), von Information bezüglich der Hard- und Software Konfiguration zu einem bestimmten Zeitpunkt (t0) und bezüglich der ausgetauschten Daten zu dem gleichen bestimmten Zeitpunkt (t0) als Eigenschaften der Produktionszelle (PZ);
b) Weitergabe dieser Daten an die Schnittstelle (SF2) zur Simulationsumgebung zum Erstellen (VA) zumindest eines virtuellen, identischen Abbildes (VI_t0) zumindest eines Teils der Produktionszelle (PZ) unter Verwendung der erfassten Information;
c) Weitergabe von zu verarbeitenden Daten aus der Produktionszelle (PZ) über die Schnittstelle (SF2) zur Simulationsumgebung (TS);
d) Bezug von Konfigurationsdaten über die Schnittstelle (S_NEWDB) zur Datenbank (NEW_DB).

7. Netzwerkmanagementsystem (NMS) für eine Produktionszelle (PZ) nach Anspruch 6, welche als Software Definiertes Netzwerk gebildet wird,
bei dem die Schnittstelle (SPZ) zur Produktionszelle durch eine Schnittstelle zum SDN Controller gebildet wird.

8. Netzwerkmanagementsystem (NMS) nach Anspruch 6 oder 7 mit einer Schnittstelle zu einer zu einer Konfigurationsdatenbank (KF_DB) über die Daten bzgl. einer Hard- oder/und Softwarekonfiguration beziehbar sind und einer Schnittstelle zu einer Datenbank (DS_DB) in welcher Daten zu den ausgetauschten Datenströmen verfügbar sind.

9. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 5 durchzuführen.

10. Datenträger, der das Computerprogrammprodukt nach Anspruch 9 speichert.
